# FASCICULE DE BREVET EUROPEEN

(11) **EP 3 009 005 B1**
(45) Date de publication et mention de la délivrance du brevet: **28.02.2018**
(21) Numéro de dépôt: 15187321.3
(22) Date de dépôt: 18.09.2013
(51) Int. Cl.: A61K 33/26, A23L 33/165, C05D 9/02

(54) **COMPOSITION NUTRITIVE À BASE DE FER**
EISENHALTIGE NÄHRSTOFFZUSAMMENSETZUNG
IRON-BASED NUTRITIVE COMPOSITION

(30) Priorité: 10.10.2012 BE 201200667
(43) Date de publication de la demande: 20.04.2016
(62) Demande divisionnaire de: 13763078.6
(73) Titulaire: Prayon, 4480 Engis (BE)
(72) Inventeur: CAPPELLE, Philippe, Jacques, Myriam, 4130 ESNEUX (BE); VERHELST, Kurt, Thierry, S., 2360 OUD-TURNHOUT (BE)
(74) Mandataire: Gevers Patents

(56) Documents cités:
- CN-A- 1 274 706
- US-A- 3 244 500
- US-A- 4 336 052
- US-A1- 2004 099 028
- US-A1- 2006 196 240
- US-A1- 2010 206 032

## Description

La présente invention se rapporte au domaine des compositions nutritives et à leur procédé d'obtention.

Que ce soit pour la nutrition humaine, animale, celle des végétaux ou encore celle des microorganismes, l'assimilation de minéraux (macro- et micronutriments) est indispensable aux cycles vitaux de ces différents organismes. Cependant, pour pouvoir être absorbés et assimilés, ces éléments nutritifs doivent indispensablement être biodisponibles, c'est-à-dire pouvoir être totalement solubilisés dans une solution au départ de laquelle ces organismes peuvent les puiser et les assimiler.

Toutefois, le fer est un micronutriment bien connu pour être un élément particulièrement peu solubilisable. Une des voies utilisées pour solubiliser le fer réside dans le fait de le complexer à un agent organique. Toutefois, de tels agents organiques sont de plus en plus controversés comme additif alimentaire et ne conviendraient donc plus pour la solubilisation de fer dans les additifs alimentaires ou dans toute culture de microorganismes destinés à être ingérés comme certains ferments ou les microalgues ou encore dans les végétaux comestibles.

Quelques auteurs se sont penchés sur la possibilité de complexer le fer à des polyphosphates comme le pyrophosphate, le tripolyphosphate ou encore des polymères supérieurs de phosphate et c'est dans ce contexte que la présente invention s'inscrit.

Le document WO 2012020427 décrit une composition de fertilisants à relargage retardé, sous forme de polyphosphates dans laquelle les polyphosphates sont solubles dans l'acide. La composition est obtenue en phase liquide.

Le document CN 1274706 enseigne une composition, obtenue en phase liquide, de fertilisants à base de sulfate de potassium et de sulfate de fer. Après séchage, la composition obtenue est à relargage retardé.

La présente invention concerne une composition nutritive solide inorganique et à son utilisation, telles que définies par les revendications. La présente description se rapporte plus particulièrement à un procédé de fabrication d'une composition nutritive à base de fer comprenant au moins les étapes d'alimentation d'une source de fer et d'alimentation d'une source de phosphate comprenant au moins un polyphosphate.

Les documents US 2006196240 et US 2010206032 divulguent un procédé de fabrication d'un fertilisant à relargage progressif notamment en fer et en manganèse dans lequel les micronutriments sont insolubles dans l'eau et libérés de manière différée. Le procédé implique une première étape de chauffage d'un acide phosphorique en présence d'un mélange comprenant une source de micronutriments pour former un polyphosphate liquide, une seconde étape comprenant une neutralisation dudit polyphosphate liquide suivie d'une étape de séchage. Une fois que le polyphosphate a été séché, celui-ci est pulvérisé.

Les deux types de produits obtenus par chacun des procédés précités présentent l'inconvénient d'être des produits insolubles à relargage progressif. Les éléments nutritifs ne sont donc pas immédiatement biodisponibles.

Le document US 2004/0099028 décrit la préparation de fertilisants à libération lente comprenant du polyphosphate tel que de l'apatite, et du fer. Le document US3244500 divulgue un procédé dans lequel une source de micronutriment comme du fer, du zinc, du cuivre ou du manganèse est mise en solution dans de l'acide superphosphorique. De l'ammoniaque est ensuite ajouté à pression élevée et à température élevée pour produire un sel fondu de polyphosphate d'ammonium qui est ensuite granulé. Ce procédé décrit également un autre procédé dans lequel l'acide superphosphorique et l'ammoniaque réagissent d'abord ensemble pour former un sel fondu de polyphosphate d'ammonium auquel la source micronutritive est ajoutée avant ou après la granulation.

Malheureusement, ce dernier procédé mis en oeuvre pour obtenir des compositions nutritives à base de fer est complexe, requiert des conditions drastiques de fabrication et ne permet pas d'obtenir des compositions nutritives polyvalentes, trouvant des applications dans des domaines aussi variés que l'alimentaire, les compléments nutritifs, la culture de micro-organismes, l'horticulture, l'hydroponie ou encore la fertirrigation, permettant d'obtenir du fer biodisponible.

La présente invention entend donc solutionner ces problèmes en procurant une composition nutritive polyvalente telle que définie par les revendications de manière particulièrement simple.

Pour résoudre ces problèmes, il est décrit un procédé tel que mentionné plus haut caractérisé en ce qu'il comprend en outre une étape de mélange de ladite source de fer alimentée avec ladite source de phosphate comprenant au moins un polyphosphate, ladite alimentation de ladite source de fer étant une alimentation d'une phase solide de ladite source de fer et ladite alimentation de ladite source de phosphate comprenant au moins un polyphosphate étant une alimentation d'une phase solide de ladite source de phosphate comprenant au moins un polyphosphate, ledit mélange étant un mélange solide-solide de ladite phase solide de ladite source de fer et de ladite phase solide de ladite source de phosphate comprenant au moins un polyphosphate avec obtention d'une composition nutritive solide et hydrosoluble à base de fer.

Comme on peut le constater, le procédé permet de procurer une composition nutritive solide et hydrosoluble à base de fer de manière très simple par un simple mélange solide-solide de la source de fer avec la source de phosphate comprenant au moins un polyphosphate.

Selon l'invention, ladite composition nutritive solide inorganique comprenant au moins un polyphosphate et au moins une source de fer en tant que micronutriment, est caractérisée en ce que ladite composition nutritive solide est une composition nutritive solide hydrosoluble comprenant une teneur en fer comprise entre 0,1 et 5% en poids de fer par rapport au poids total de ladite composition solide, en ce que ledit au moins un polyphosphate est choisi dans le groupe constitué des polyphosphates alcalins sodiques et potassiques sous forme de poudre ou de granulé, lesdits polyphosphates présentant 2 à 3 atomes de P, et en ce que la composition présente un rapport molaire P_{poly}/Fe compris entre 5 et 50, où P_{poly} désigne le nombre de moles de phosphore sous forme de chaînes polyphosphates. La composition nutritive solide ainsi obtenue est d'une part une composition minérale, ne contenant donc pas de composés organiques, ce qui rend son utilisation particulièrement polyvalente et ne contient pas une teneur en ammonium dictée par le procédé, contrairement aux procédés divulgués notamment dans le document US3244500. En effet, lesdits procédés requièrent la présence d'ammonium au prorata de la teneur en polyphosphate. Par conséquent, la composition nutritive ainsi obtenue ne peut dès lors pas être utilisée de manière polyvalente. Par exemple, l'utilisation d'une telle composition nutritive dans le domaine de l'horticulture est contraignante à cause de la présence d'ammonium qui n'est pas recommandée.
De plus, la composition nutritive solide selon la présente invention ainsi obtenue est hydrosoluble, procurant de cette façon le fer sous forme biodisponible et peut-être mise en solution de manière aisée et rapide pour des applications où la source de fer biodisponible doit être sous forme liquide.

Par l'expression « composition hydrosoluble », on entend, au sens de la présente invention, une composition entièrement soluble dans l'eau, à savoir qu'après dissolution de celle-ci dans l'eau, un pourcentage d'insoluble inférieur à 0,2 % en poids par rapport au poids de la composition solide, de préférence inférieur à 0,1 % en poids par rapport au poids de la composition solide est obtenu.

En ce qui concerne le fer, dans une telle composition hydrosoluble au sens de la présente invention une dissolution telle qu'une perte de l'ordre de moins de 5% en fer, de préférence de moins de 2% en fer, de manière plus préférentielle de moins de 0,5% en fer est notée lors du passage du fer depuis sa forme solide jusqu'à sa forme dissoute.

De plus, l'obtention d'une composition solide par le procédé décrit facilite grandement l'entreposage de la composition en ce qu'elle est particulièrement stable tout en étant rapidement solubilisable si nécessaire et apportant le fer sous forme biodisponible, ce qui en fait une composition particulièrement polyvalente, applicable autant dans le domaine alimentaire, dans le domaine de la culture de microorganismes et de végétaux, et ce sans requérir d'installation de production complexe.

Il a en effet été montré que ledit au moins un polyphosphate agit rapidement comme un complexant une fois que la forme solide de la composition suivant l'invention est mise en solution, ceci même malgré un pH élevé auquel le fer est très peu soluble et permet de maintenir en solution le fer présent quel que soit l'état d'oxydation du fer qui est ainsi toujours biodisponible.

Le procédé décrit permet donc de procurer de manière extrêmement simple une composition nutritive, solide et stable, inorganique dans laquelle le fer est biodisponible qui est donc parfaitement polyvalente en ce qu'elle peut s'appliquer autant au domaine des compléments alimentaires, des additifs alimentaires (les phosphates et polyphosphates étant des additifs de grade alimentaire), de la culture de microorganismes où les micronutriments doivent être directement biodisponibles et où les précipités doivent être bannis dès lors qu'ils perturbent la culture en elle-même en étant la cause d'agglomération, parfois de rupture des parois cellulaires, et d'obstruction des mécanismes de recirculation, de l'horticulture et de ses formes dérivées comme l'hydroponie ou la fertirrigation dans lesquelles la biodisponibilité du fer est d'autant plus cruciale et dans lesquelles toute présence de précipité obstrue les tubulures de manière intempestive, comme mentionné ultérieurement. Bien entendu, ceci ne limite pas les applications envisagées de la composition selon la présente invention, qui trouve également une utilité aux cultures de plein champ, à l'agriculture, l'arboriculture, la floriculture, les cultures maraîchères, fruitières, culture des gazons et pelouses.

Dans une forme de réalisation particulière, le procédé comprend en outre, après ledit mélange solide-solide, une étape de dissolution en phase aqueuse de ladite phase solide de ladite source de fer mélangée à ladite phase solide de ladite source de phosphate comprenant au moins un polyphosphate, avec formation d'une solution nutritive à base de fer biodisponible.

Comme on peut le constater, la mise en solution de la composition nutritive solide inorganique se fait par une simple dissolution, sans conditions opératoires complexes de pression ou de température et permet d'obtenir une solution nutritive dans laquelle le fer est biodisponible. Ladite composition soluble présentant, après dissolution de celle-ci dans l'eau, un pourcentage d'insoluble inférieur à 0,2 % en poids par rapport au poids de la composition solide, de préférence inférieur 0,1 % en poids par rapport au poids de la composition solide. Plus particulièrement, lors de la dissolution de la composition nutritive, la perte de fer peut être estimée à moins de 5 % en poids et ce entre le passage du fer à l'état solide vers le fer à l'état dissout. La solution nutritive ainsi obtenue est stable en ce que le fer est complexé suffisamment rapidement de manière à ne pas précipiter à l'entreposage de la phase liquide.

En effet, ladite composition nutritive solide inorganique est mise en solution pendant un temps de dissolution inférieur à 15 minutes à 20°C et sous agitation magnétique comme mentionné dans les exemples, à 400 tours/min pour une turbidité de solution inférieure à 50 NTU (Nephelometric Turbidity Unit), de préférence inférieure à 20 NTU et à une concentration de référence de 10 mmol de Fe/kg. Ladite composition nutritive présentant un pourcentage d'insoluble inférieur à 0,2% en poids par rapport au poids de la composition solide, de préférence inférieur à 0,1% en poids par rapport au poids de la composition solide.

De plus, dans une forme de réalisation particulière du procédé décrit, la composition solide obtenue à l'issue du procédé peut être directement commercialisée à l'état de simple mélange pour de nombreuses applications dès lors qu'elle est aisément et rapidement solubilisée.

Dans une variante selon la présente invention, le procédé comprend en outre, après ledit mélange solide-solide, une étape de dissolution en phase aqueuse de ladite phase solide de ladite source de fer mélangée à ladite phase solide de ladite source de phosphate comprenant au moins un polyphosphate, avec formation d'une solution nutritive à base de fer biodisponible, suivie d'une étape de transformation de ladite solution nutritive à base de fer biodisponible en une composition nutritive solide et hydrosoluble à base de fer. En effet, pour certaines applications, il peut être requis de passer par une phase de dissolution pour ensuite reformer la composition solide et hydrosoluble à base de fer dans laquelle le complexe rapidement formé par la dissolution du mélange solide-solide en phase aqueuse est alors présent dans la composition nutritive inorganique solide et hydrosoluble.

Avantageusement, ladite étape de transformation de ladite solution nutritive à base de fer biodisponible en une composition nutritive solide et hydrosoluble à base de fer est une étape de séchage, éventuellement suivie d'une étape de réduction ou de criblage granulométrique ou une étape de granulation ou encore une étape d'atomisation.

Avantageusement, ladite phase solide de ladite source de fer et ladite phase solide de ladite source de phosphate comprenant au moins un polyphosphate présentent des particules qui sont toutes de taille inférieure à 5 mm.

Dans une forme particulière du procédé décrit, le d_{50,V} (la médiane de la distribution de tailles exprimée en volume) de ladite phase solide de ladite source de fer divisé par le d_{50,V} de ladite phase solide de ladite source de phosphate comprenant au moins un polyphosphate représente une valeur relative comprise entre 0,2 et 5 ce qui permet d'obtenir un mélange solide-solide à l'issue du procédé selon l'invention homogène (le mélange étant effectué de manière suffisante pour obtenir un mélange homogène). La valeur du d_{50,V} dépend de la méthode physico-chimique utilisée qui peut, par exemple, être basée sur un procédé de granulation d'un des composés de la composition, une atomisation, un séchage, une sélection granulométrique de type tamisage, un sélecteur dynamique ou statique, une cristallisation par mûrissement/grossissement de cristaux, un broyage, une agglomération de particules en phase solide et/ou liquide, etc.

Dans une variante du procédé, ledit d₅₀ de ladite phase solide de ladite source de fer divisé par ledit d_{50,V} de ladite phase solide de ladite source de phosphate comprenant au moins un polyphosphate représente une valeur relative inférieure ou égale à 0,2, de préférence entre 0,01 et 0,2. L'opération de mélange solide-solide selon la présente invention étant effectuée de manière suffisante pour obtenir un mélange homogène. Cela peut conduire, par interaction des deux phases solides, à un enrobage des particules les plus grossières par les particules les plus fines.

De manière avantageuse, ledit d_{50,v} de ladite phase solide de ladite source de fer divisé par ledit d_{50,v} de ladite phase solide de ladite source de phosphate comprenant au moins un polyphosphate représente une valeur relative supérieure ou égale à 5.

Dans une forme de réalisation avantageuse, le procédé comprend en outre une étape d'alimentation d'au moins une source additionnelle de micronutriments avant, pendant ou après ladite étape de mélange solide-solide. En effet, en fonction de l'application de la composition nutritive ainsi obtenue, il peut être requis d'ajouter d'autres nutriments pour faciliter l'utilisation de la composition, comme par exemple dans le cas de l'horticulture ou de ses formes dérivées comme l'hydroponie ou la fertirrigation où généralement, les consommateurs préfèrent utiliser une composition où les micronutriments essentiels et parfois également difficilement solubles sont présents de manière biodisponibles.

Avantageusement, ladite étape d'alimentation de ladite au moins une source additionnelle de micronutriment est une alimentation d'une phase solide de ladite au moins une source additionnelle de micronutriment dans ladite phase solide de ladite source de fer, dans ladite phase solide de ladite source de phosphate comprenant au moins un polyphosphate, dans ledit mélange solide-solide de ladite phase solide de ladite source de fer et de ladite phase solide de ladite source de phosphate comprenant au moins un polyphosphate ou encore une alimentation séparée d'une phase solide de ladite au moins une source additionnelle de micronutriment alimentée simultanément à ladite étape de mélange de ladite source de fer alimentée avec ladite source de phosphate comprenant au moins un polyphosphate.

Comme on peut le constater, cette étape d'ajout d'une source ou de plusieurs sources additionnelles de micronutriment se fait de manière tout aussi extrêmement simple et facile à mettre en oeuvre.

Dans une variante, ladite étape d'alimentation de ladite au moins une source additionnelle de micronutriment est une alimentation d'une phase solide de ladite au moins une source additionnelle de micronutriment dans ladite composition nutritive solide et hydrosoluble à base de fer.

Dans encore une autre variante, ladite étape d'alimentation de ladite au moins une source additionnelle de micronutriment est une alimentation d'une phase solide ou liquide de ladite au moins source additionnelle de micronutriment, dans ladite solution nutritive à base de fer biodisponible, renforçant encore de cette façon le caractère flexible, simple et polyvalent du procédé selon la présente invention.

De manière préférentielle, ladite au moins une source de fer est choisie dans le groupe constitué de Fe₂(SO₄)₃.xH₂O où x représente un coefficient molaire compris entre 0 et 9, MFe(SO₄)₂.12H₂O où M représente Na ou K, Fe(NO₃)₃.xH₂O où x représente un coefficient molaire compris entre 0 et 9, FeCl₃. xH₂O où x représente un coefficient molaire compris entre 0 et 6, Fe₄(P₂O₇)₃, FePO₄.xH₂O où x représente un coefficient molaire compris entre 0 et 4, FeSO₄.xH₂O où x représente un coefficient molaire compris entre 0 et 7, FeCl₂.xH₂O où x représente un coefficient molaire compris entre 0 et 4, FeO.xH₂O où x représente un coefficient molaire compris entre 0 et 1, Fe(NH₄)PO₄.H₂O, oxysulfate de fer et leurs mélanges. Selon la présente invention ladite source de phosphate comprenant au moins un polyphosphate est choisie dans le groupe constitué des polyphosphates alcalins sodiques et potassiques sous forme de poudre ou de granulé. Lesdits polyphosphates présentent 2 à 3 atomes de P. De façon avantageuse, ladite source de polyphosphate comprend une quantité de polyphosphate d'ammonium inférieure à 70 % en poids, de préférence inférieure à 50 % en poids, plus préférentiellement inférieure à 30 % en poids, avantageusement inférieure à 10 % en poids, de manière plus avantageuse inférieure à 5 % en poids, par rapport au poids total en polyphosphate. La quantité de polyphosphate d'ammonium étant déterminée par analyse élémentaire (méthodes classiques) en combinaison avec la diffraction des rayons X (technique des poudres) pour l'identification des phases cristallines en présence.

Plus particulièrement encore, selon la présente invention, ladite au moins une source additionnelle de micronutriment est choisie dans le groupe constitué des sources de B, Mn, Zn, Cu, Mo, Co, et leurs mélanges, et dans lequel ladite au moins une source additionnelle de micronutriment est alimentée avec un ratio atomique par rapport au Fe entre 0,1 et 5 pour le B, 0,05 et 2,5 pour le Mn, 0,01 et 1 pour le Zn, 0,005 et 0,25 pour le Cu et le Mo et entre 0,001 et 0,1 pour le Co permettant par exemple d'obtenir des compositions nutritives particulièrement adaptées pour des applications en horticulture, hydroponie, fertirrigation ou encore pour des cultures de microorganismes.

Plus particulièrement, ladite au moins une source additionnelle de micronutriment est choisie dans le groupe constitué de Zn(NH₃)₄SO₄, ZnCl₂, Zn(NO₃)₂.xH₂O où x représente un coefficient molaire compris entre 0 et 3, oxysulfate de zinc dont la fraction massique totale en zinc est comprise dans la plage allant de 20 à 60% par rapport au poids du composé, ZnSO₄.xH₂O où x représente un coefficient molaire compris entre 0 et 7, Cu(OH)₂, CuCl, CuCl₂, 3Cu(OH)₂.CuCl₂, CuSO₄.xH₂O où x représente un coefficient molaire compris entre 0 et 5, Cu(NH₄)PO₄.H₂O, MnCl₂.xH₂O où x représente un coefficient molaire compris entre 0 et 4, oxysulfate de manganèse dont la fraction massique totale en manganèse est comprise dans la plage allant de 30 à 50% par rapport au poids du composé, MnSO₄.xH₂O où x représente un coefficient molaire compris entre 0 et 5, (NH₄)₆Mo₇O₂₄.4H₂O, H₂MoO₄.H₂O, Na₂MoO₄.2H₂O, H₃BO₃, Na₂B₁₀O₁₆.10H₂O, Na₂B₄O₇, Na₂B₄O7.5H₂O, Na₂B₄O₇.10H₂O, Na₂B₈O₁₃.4H₂O, CoCl₂.6H₂O, Co(NO₃)₂.6H₂O et leurs mélanges.

Avantageusement, ladite source de phosphate comprenant au moins un polyphosphate comprend en outre du phosphore sous forme d'orthophosphate selon un rapport molaire Pₒᵣₜₕₒ/Pₜₒₜₐₗ compris entre 0 et 0,95, où Pₒᵣₜₕₒ représente le nombre de moles de phosphore sous forme d'orthophosphate et où Pₜₒₜₐₗ représente le nombre de mole de phosphore total, ce rapport molaire étant de préférence compris entre 0 et 0,3.

Plus particulièrement, ladite source de phosphate comprend au moins un polyphosphate choisi dans le groupe constitué des polyphosphates alcalins sodiques et potassiques et présente un rapport molaire M/Pₜₒₜₐₗ de source de phosphate prédéterminé, de façon à respecter un rapport molaire M/Pₜₒₜₐₗ global dans le mélange solide-solide compris entre 1 et 2, de préférence entre 1,3 et 2 et où M représente le nombre de mole total en métal alcalin sodique et potassique et où Pₜₒₜₐₗ représente le nombre de mole total de phosphore. Selon la présente invention, ladite au moins une source de fer et ladite au moins une source de phosphate comprenant au moins un polyphosphate ainsi qu'éventuellement ladite au moins une source additionnelle de micronutriment sont réalisées selon un rapport molaire P_{poly}/Fe compris entre 5 et 50, de préférence entre 8 et 32 où Fe représente le nombre de mole total de fer et où P_{poly} représente le nombre de mole total de phosphore sous forme de polyphosphate.

En effet, il a été montré qu'un tel rapport entre la teneur en fer et la teneur en polyphosphate assure une vitesse de dissolution suffisamment élevée de la composition solide et permet de maintenir le fer entièrement en solution dans la solution nutritive finale malgré la présence d'autres ions tels que Ca²⁺ et Mg²⁺ qui concurrencent le fer par leurs propres réactions de complexation avec les polyphosphates et pendant suffisamment longtemps pour assurer une stabilité de la solution nutritive obtenue après dissolution.

La présente invention se rapporte à une composition nutritive solide inorganique comprenant au moins un polyphosphate et au moins une source de fer en tant que micronutriment.

Comme on l'a mentionné précédemment, de telles compositions nutritives trouvent des applications dans de nombreux domaines aussi variés que l'alimentation humaine et animale, la culture de microorganismes ou encore l'horticulture et ses dérivés comme l'hydroponie et la fertirrigation. Toutefois, dans de nombreuses applications, le fer est un élément apparaissant comme difficilement soluble et souvent peu biodisponible car selon le milieu dans lequel il se trouve, il génère bien souvent l'apparition de précipités.

Par exemple, dans des applications d'additifs alimentaires, comme des liquides supplémentés (laitages, boissons, yaourt, etc.) ou tout autre aliment supplémenté, le milieu dans lequel le fer est ajouté n'est pas forcément à un pH qui favorise la dissolution du fer, ce qui peut poser de nombreux problèmes, surtout dans l'acceptation du produit alimentaire par le consommateur, qui n'a pas envie d'ingurgiter un aliment trouble ou contenant des précipités.

Dans le cas des organismes végétaux, si le carbone représente l'élément nutritif essentiel à la photosynthèse, les éléments minéraux (les macro- et les micronutriments) sont tout aussi importants pour que les végétaux se développent de façon optimale. Ces éléments minéraux sont typiquement acquis par les plantes au départ du sol ou du substrat de culture, par l'intermédiaire des poils absorbants racinaires permettant à l'eau et aux minéraux d'être absorbés.

Parmi ces micronutriments, le fer est celui dont la plante requiert la concentration la plus élevée (de l'ordre de 100 mg/kg de tissu sec), ce minéral étant nécessaire à la synthèse de la chlorophylle qui est elle-même indispensable à la photosynthèse, laquelle est directement liée à la croissance des plantes.

Pourtant, le fer est très peu soluble en solution aqueuse et est, par conséquent, très peu biodisponible pour les végétaux ne bénéficiant pas d'un pH acide gastrique pour faciliter la biodisponibilité.

De nos jours, de nombreuses cultures (tomates, concombres, courgettes, laitues, poivrons, ...) sont réalisées en cultures hydroponiques ou par des systèmes de goutte-à-goutte, ces deux techniques permettant de réaliser une fertirrigation, c'est-à-dire de réaliser une alimentation à la fois hydrique et minérale des végétaux par apport d'une solution nutritive jusqu'aux racines des plantes.

Cependant, ces techniques culturales étant basées sur l'absence de substrat ou sur l'utilisation de substrats inertes (sable, billes d'argile, laine de roche, ...), d'une part elles ne sont pas aidées par la flore microbienne du sol qui régule le pH de la terre pour les cultures plus conventionnelles et d'autre part ne bénéficient pas de l'apport de substances natives également présentes dans le sol qui pourraient complexer le fer et le rendre biodisponible.

C'est pourquoi, de nombreuses recherches ont été menées pour mettre au point des compositions nutritives fertilisantes solides inorganiques dont les constituants, une fois en solution, devraient pouvoir être totalement dissous, que ce soit le fer ou les autres éléments nutritifs, les compositions fertilisantes solides inorganiques ayant par ailleurs à présenter un pouvoir tampon suffisant.

Par exemple, des compositions nutritives, en particulier fertilisantes solides inorganiques comprenant des micronutriments, dont le fer, sont divulguées dans le document US 3856500. Ce document décrit des compositions de fertilisants sous forme de polyphosphates, par exemple sous forme de polyphosphates de potassium et de fer. Les micronutriments peuvent être contenus dans la solution fertilisante sous forme dissoute grâce notamment à l'ajout d'agents chélatants (acide gluconique, ...) et/ou sous forme de solides finement divisés. La teneur en métaux lourds de la composition sous forme solide est comprise entre 5 et 40% en poids par rapport au poids total de la composition sous forme solide.

Malheureusement, une telle composition nutritive solide inorganique ne permet pas d'obtenir une solution liquide fertilisante où l'ensemble des constituants, dont les micronutriments, sont totalement dissous, ni une composition polyvalente applicable dans tous les domaines d'utilisation tels que mentionnés ci-dessus.

En effet, la composition fertilisante solide selon le document US 3856500 donne lieu à une suspension colloïdale, c'est-à-dire à une solution liquide qui comprend, en suspension colloïdale, des particules finement divisées mais toutefois suffisamment petites pour que le mélange soit homogène.

Une telle suspension colloïdale n'est malheureusement pas adaptée aux systèmes de culture hydroponiques ou aux systèmes de goutte-à-goutte car, même si les particules présentes dans la suspension colloïdale sont finement divisées, elles s'accumulent au cours du temps dans les tuyaux véhiculant la solution nutritive ainsi qu'au niveau des têtes de dispersion, ce qui entraine un bouchage du système de fertilisation. Le système d'acheminement de la solution nutritive, dès lors inopérationnel, doit être complètement démonté pour être nettoyé ou remplacé, ce qui ne permet plus d'assurer la nutrition des végétaux ni la continuité de la fertirrigation qui est pourtant un but premier de cette technique. De telles manipulations requièrent du temps, monopolisent des surfaces qui ne peuvent plus être utilisées pour la production de végétaux, ce qui, par conséquent, a des répercutions en terme de rendement cultural et de coûts de production.

Par ailleurs, en ce qui concerne les organismes végétaux, sans toutefois y être limité, en termes de biodisponibilité, les éléments nutritifs en suspension colloïdale et non totalement dissous ne sont pas assimilés correctement voire pas du tout par les végétaux au travers du phénomène d'osmose observé entre la vacuole des poils absorbants racinaires et le milieu de culture. Les végétaux peuvent ainsi être carencés en l'un ou l'autre des éléments nutritifs véhiculés par la solution nutritive.

L'invention a pour but de pallier les inconvénients de l'état de la technique en procurant une composition nutritive solide inorganique dont tous les éléments nutritifs se dissolvent totalement en solution aqueuse sans qu'aucun d'entre eux ne reste en suspension (colloïdale ou non) dans la solution nutritive et sont biodisponibles.

Pour résoudre ce problème, il est prévu suivant l'invention, une composition nutritive solide inorganique comprenant au moins un polyphosphate et au moins une source de fer en tant que micronutriment, caractérisée en ce que ladite composition nutritive solide est une composition nutritive solide hydrosoluble comprenant une teneur en fer comprise entre 0,1 et 5% en poids de fer par rapport au poids total de ladite composition solide, de préférence entre 1 et 3% en poids de fer par rapport au poids total de ladite composition solide, en ce que ledit au moins un polyphosphate est choisi dans le groupe constitué des polyphosphates alcalins sodiques et potassiques sous forme de poudre ou de granulé, lesdits polyphosphates présentant 2 à 3 atomes de P, et en ce que la composition présente un rapport molaire P_{poly}/Fe compris entre 5 et 50, où P_{poly} désigne le nombre de moles de phosphore sous forme de chaînes polyphosphates.

Comme mentionné précédemment, par le terme « hydrosoluble », on entend, au sens de la présente invention et en ce qui concerne le fer, une dissolution telle qu'une perte de l'ordre de moins de 5% en fer, de préférence de moins de 2% en fer, de manière plus préférentielle de moins de 0,1 % en fer est notée lors du passage du fer depuis sa forme solide jusqu'à sa forme dissoute.

Dans le cadre de la présente invention, il a été montré qu'une telle composition nutritive solide inorganique comprenant au moins un polyphosphate et une plage de teneur réduite et étroite en fer comprise entre 0,1 et 5 %, de préférence entre 1 et 3% en poids de fer par rapport au poids total de la composition solide, permet une dissolution totale du fer et de tous les constituants de la composition nutritive solide inorganique lorsqu'elle est mise en solution aqueuse et ce de manière très rapide.

Il a en effet été montré que ledit au moins un polyphosphate agit rapidement comme un complexant une fois que la forme solide de la composition suivant l'invention est mise en solution, ceci même malgré un pH élevé auquel le fer est très peu soluble. Ce maintien en solution est assuré quel que soit l'état d'oxydation du fer qui est ainsi toujours biodisponible pour les végétaux et ne contribue pas au bouchage du système de fertirrigation.

En plus d'agir comme agents complexants pour le fer, les polyphosphates sodiques et potassiques préférés selon la présente invention contribuent à l'apport de macronutriments nécessaires aux organismes vivants. En effet, lesdits polyphosphates permettent notamment d'apporter du potassium (K) et du phosphore (P) sous formes assimilables utiles aux organismes, comme par exemple les végétaux. Ainsi, de façon tout à fait avantageuse, la composition nutritive solide inorganique selon l'invention peut être utilisée pour tout type d'applications comme l'alimentation humaine ou animale mais également pour les cultures végétales comme les cultures « classiques » (cultures en pleine terre) ou pour la fertirrigation (par exemple pour le goutte-à-goutte, la culture hors-sol ou encore l'hydroponie).

Selon l'invention, ladite composition nutritive solide inorganique présente un rapport molaire P_{poly}/Fe compris entre 5 et 50, de préférence entre 8 et 32, où Fe correspond au nombre de moles total de fer et où P_{poly} désigne le nombre de moles de phosphore sous forme de chaines polyphosphates par exemple obtenu par analyses en Pₜₒₜₐₗ et en Pₒᵣₜₕₒ permettant de déterminer le nombre de moles P_{poly} en appliquant l'équation P_{poly} = Pₜₒₜₐₗ - Pₒᵣₜₕₒ.

Comme mentionné précédemment, ce rapport entre la teneur en fer et la teneur en polyphosphate assure une vitesse de dissolution suffisante de la composition solide et permet de maintenir le fer entièrement en solution dans le milieu nutritif final malgré la présence d'autres ions tels que Ca²⁺ et Mg²⁺ qui concurrencent le fer par leurs propres réactions de complexation avec les polyphosphates.

Avantageusement, la composition nutritive selon la présente invention comprend en outre au moins une source additionnelle de micronutriment choisie dans le groupe constitué des sources de B, Mn, Zn, Cu, Mo, Co et leurs mélanges, et en ce que ladite au moins une source additionnelle de micronutriments est présente dans un ratio atomique par rapport au Fe compris entre 0,1 et 5 pour le B, entre 0,05 et 2,5 pour le Mn, entre 0,01 et 1 pour le Zn, entre 0,005 et 0,25 pour le Cu et pour le Mo et entre 0,001 et 0,1 pour le Co.

De telles teneurs en micronutriments assurent les apports en minéraux de façon optimale et adéquate, c'est-à-dire selon les besoins réels des organismes vivants et particulièrement des végétaux. Ces teneurs peuvent toutefois être modifiées en fonction de l'application ou du stade de développement du végétal qui, selon sa morphologie et sa phase de croissance requiert des proportions variables entre des différents macro- et micronutriments.

De préférence, selon la présente invention, ledit au moins un polyphosphate est choisi dans le groupe constitué des pyrophosphates et des tripolyphosphates, comme par exemple le tétrapotassium pyrophosphate (TKPP), le potassium tripolyphosphate (KTPP), le sodium tripolyphosphate (STPP), le pyrophosphate de sodium acide (SAPP) et le tétrasodium pyrophosphate (TSPP). Dans le cadre de la présente invention, il a été montré que les polyphosphates à 2 et 3 atomes de P sont particulièrement indiqués pour assurer la biodisponibilité du fer dans de nombreuses applications du vivant.

Avantageusement, selon l'invention, ladite composition nutritive solide inorganique présente un rapport molaire M/Pₜₒₜₐₗ entre 1 et 2, de préférence entre 1,3 et 2 et où M représente le nombre de moles total en métal alcalin sodique et potassique et où Pₜₒₜₐₗ représente le nombre de moles total de phosphore.

Dans une forme de réalisation particulière selon la présente invention, la composition nutritive, inorganique, solide et hydrosoluble comprend en outre du phosphore sous forme d'orthophosphate selon un rapport molaire Pₒᵣₜₕₒ/Pₜₒₜₐₗ inférieur ou égal à 0,95, où Pₒᵣₜₕₒ représente le nombre de moles de phosphore sous forme d'orthophosphate et où Pₜₒₜₐₗ représente le nombre de moles de phosphore total, ce rapport molaire étant de préférence inférieur ou égal à 0,3.

Selon la présente invention, de manière préférentielle, ladite au moins une source de fer est choisie dans le groupe constitué de Fe₂(SO₄)₃.xH₂O où x représente un coefficient molaire compris entre 0 et 9, MFe(SO₄)₂.12H₂O où M représente Na ou K, Fe(NO₃)₃.xH₂O où x représente un coefficient molaire compris entre 0 et 9, FeCl₃. xH₂O où x représente un coefficient molaire compris entre 0 et 6, Fe₄(P₂O₇)₃, FePO₄.xH₂O où x représente un coefficient molaire compris entre 0 et 4, FeSO₄.xH₂O où x représente un coefficient molaire compris entre 0 et 7, FeCl₂.xH₂O où x représente un coefficient molaire compris entre 0 et 4, FeO.xH₂O où x représente un coefficient molaire compris entre 0 et 1, Fe(NH₄)PO₄.H₂O, oxysulfate de fer et leurs mélanges.

De préférence, ladite au moins une source additionnelle de micronutriments est choisie dans le groupe constitué de Zn(NH₃)₄SO₄, ZnCl₂, Zn(NO₃)₂.xH₂O où x représente un coefficient molaire compris entre 0 et 3, oxysulfate de zinc dont la fraction massique totale en zinc est comprise dans la plage allant de 20 à 60% par rapport au poids du composé, ZnSO₄.xH₂O où x représente un coefficient molaire compris entre 0 et 7, Cu(OH)₂, CuCl, CuCl₂, 3Cu(OH)₂.CuCl₂, CuSO₄.xH₂O où x représente un coefficient molaire compris entre 0 et 5, Cu(NH₄)PO₄.H₂O, MnCl₂.xH₂O où x représente un coefficient molaire compris entre 0 et 4, oxysulfate de manganèse dont la fraction massique totale en manganèse est comprise dans la plage allant de 30 à 50% par rapport au poids du composé, MnSO₄.xH₂O où x représente un coefficient molaire compris entre 0 et 5, (NH₄)₆Mo₇O₂₄.4H₂O, H₂MoO₄.H₂O, Na₂MoO₄.2H₂O, H₃BO₃, Na₂B₁₀O₁₆.10H₂O, Na₂B₄O₇, Na₂B₄O7.5H₂O, Na₂B₄O₇.10H₂O, Na₂B₈O₁₃.4H₂O, CoCl₂.6H₂O, Co(NO₃)₂.6H₂O et leurs mélanges.

Avantageusement, selon la présente invention, la composition nutritive présente après dissolution dans l'eau, comme décrit plus en détail dansl'Exemple 1, un pourcentage d'insoluble inférieur à 0,2% en poids par rapport au poids de la composition solide, de préférence inférieur à 0,1% en poids par rapport au poids de la composition solide et un temps de dissolution inférieur à 15 minutes à 20°C et sous une agitation magnétique de 400 t/min, pour une turbidité de solution inférieure à 50 NTU, de préférence inférieure à 20 NTU, à une concentration de référence de 10 mmol de Fe/kg de solution. Par exemple, la solution obtenue à partir de la composition solide peut atteindre jusque 50% en poids de celle-ci.

La présence de particules insolubles engendre une turbidité dans la solution dont la valeur dépend de plusieurs facteurs tels que la concentration en particules solides, leur distribution en taille et leur indice de réfraction relatif par rapport à la phase liquide. Le test de filtration fournit, quant à lui, une mesure directe du pourcentage pondéral en particules insolubles. Enfin, l'analyse en fer du résidu solide retrouvé sur le filtre permet d'évaluer la perte relative en fer. Les protocoles et les conditions expérimentales appliqués pour mesurer ces trois paramètres sont détaillés dans les exemples ci-après.

Ces trois paramètres permettent de vérifier si la solution répond aux exigences définies ci-dessus, lesquelles correspondent à une composition qui peut être qualifiée d'hydrosoluble dès lors qu'elles sont respectées.

Ces trois paramètres permettent de vérifier si la solution répond aux exigences définies ci-dessus, lesquelles correspondent à une composition qui peut être qualifiée d'hydrosoluble dès lors qu'elles sont respectées.

De préférence, selon l'invention, ladite composition nutritive solide inorganique présente un indice de mottage tel qu'explicité dans les exemples inférieur à 100, de préférence inférieur à 50.

Avantageusement, selon l'invention, ladite composition nutritive solide inorganique présente une durée de conservation supérieure à 6 mois, de préférence supérieure à 12 mois à 25°C.

D'autres formes de réalisation de ladite composition nutritive solide inorganique suivant l'invention sont indiquées dans les revendications annexées.

La présente invention se rapporte également à une utilisation d'une composition nutritive solide inorganique selon l'invention pour la fabrication d'une solution dans laquelle les macronutriments et les micronutriments sont biodisponibles.

Plus particulièrement, l'invention se rapporte à une utilisation d'une composition nutritive solide inorganique selon la présente invention, comme composition fertilisante pour l'horticulture, la fertirrigation, l'hydroponie et analogues.

En outre, et de manière avantageuse, l'invention se rapporte également à une utilisation de la composition selon l'invention, comme complément alimentaire ou additif alimentaire pour des aliments ou boissons enrichis en fer biodisponible.

Par exemple, la composition selon l'invention peut être utilisée pour assurer ou suppléer la nutrition des végétaux dans des systèmes de cultures hors-sol ou dans des systèmes de cultures classiques en pleine terre. Une telle composition selon l'invention peut également être utilisée dans les domaines de l'alimentation humaine ou animale (boissons ou aliments) ou encore pour la nutrition de microorganismes.

D'autres formes de réalisation de l'utilisation suivant l'invention sont indiquées dans les revendications annexées.

D'autres caractéristiques, détails et avantages de l'invention ressortiront des exemples donnés ci-après, à titre non limitatif et en faisant référence aux figures annexées et aux exemples.
La figure 1 illustre les résultats obtenus par mesure de la biomasse de plants de concombres (grammes en poids sec) nourris avec différentes solutions nutritives.
La figure 2 présente les concentrations en fer (mmol de Fe/kg de matière sèche) obtenues par mesure au départ de plants de concombres nourris avec différentes solutions nutritives.
Les figures 3 et 4 illustrent les scores relevés lors de l'estimation visuelle de la chlorose sur plants de concombres nourris avec différentes solutions nutritives.

### Exemples

Des essais ont été réalisés en condition de laboratoire afin de déterminer les caractéristiques physico-chimiques de la composition nutritive solide inorganique selon l'invention. Des tests de dissolution, de vieillissement et de mottage ont été menés dont les résultats sont présentés ci-dessous.

Ces différents essais ont été réalisés suite au mélange durant 30 secondes, dans un mélangeur à poudre de laboratoire (Magimix type 5200), d'un premier composant comprenant au moins un polyphosphate avec un deuxième composant comprenant au moins une source de fer. Ces deux composants (ou matières premières) ont été utilisés tels quels sans aucun traitement préalable et ont été introduits simultanément dans le mélangeur.

### EXEMPLE 1. - Tests de dissolution et de vieillissement

Six compositions, telles que reprises au tableau 1 ont été élaborées.

**TABLEAU 1.-**

| | Composition solide | | Test de dissolution | | | | |
|---|---|---|---|---|---|---|---|
| | Type de polyphosphate | Source de Fe | RM (Poly / Fe) | [Fe] mmol/kg solution | Temps dissolution (min) | Temps agitatio n (min) | pH |
| 1 | KTPP (a) | FeSO₄. 7H₂O (e) | 10 | 10 | <10 | 15 | 9,4 |
| 2 | KTPP (b) | FeSO₄. H₂O (f) | 10 | 50 | < 15 | 15 | 8,7 |
| 3 | KTPP (a) | FeCl₂. 4H₂O (g) | 10 | 50 | 4 | 15 | ND |
| 4 | TKPP (c) | FeSO₄. 7H₂O (e) | 10 | 20 | 5 | 840 | 9,8 |
| 5 | STPP (d) | FeSO₄. 7H₂O (e) | 14 | 50 | < 15 | 15 | ND |
| 6 | KTPP (b) | FeSO₄. 7H₂O (e) | 30 | 50 | <10 | 15 | 9,6 |

| | | | | | | | |
|---|---|---|---|---|---|---|---|
| (a) 46,4% en poids de P₂O₅ total, 53,3% en poids de K₂O, 1,6%p > 1 mm, 86%p < 0,5 mm (b) 46,6% en poids de P₂O₅ total, 53,2% en poids de K₂O, 0.6%p > 2 mm, 34%p < 0,5 mm (c) 42,7% en poids de P₂O₅ total, 57,0% en poids de K₂O (d) 57,6% en poids de P₂O₅ total, 42,1% de Na₂O (e) 19,2% en poids de fer total (f) 28,7% en poids de fer total (granulométrie de 0 à 0,5 mm) (g) 28,0% en poids de fer total ND = valeur non déterminée | | | | | | | |

### Test de dissolution

Les mélanges pulvérulents solides obtenus sont introduits instantanément dans un bécher (diamètre intérieur 6 cm) qui contient l'eau de dissolution à 20°C et qui est agité à l'aide d'un barreau magnétique (longueur 4 cm) à une vitesse de 400 tours par minute. Chaque solution finale obtenue pèse 250 g et renferme 10, 20 ou 50 mmole de Fe/kg de solution au total.

Après un temps donné d'agitation, on évalue le degré de dissolution final en mesurant :
- la turbidité de la solution à l'aide d'un néphélomètre de laboratoire HACH Ratio/XR, et
- la concentration en insoluble (particules solides résiduelles).

La teneur en insoluble, dont le résultat est exprimé par rapport à la masse initiale de solide, est mesurée de manière gravimétrique par filtration sur une membrane de 0,45 µm (type Porafil NC de Macherey-Nagel), le résidu étant lavé et séché à 105°C.

Par ailleurs, une analyse quantitative du fer contenu dans ce résidu solide permet de déterminer la perte relative en fer.

Le tableau 2 présente les caractéristiques des six compositions quant aux critères de turbidité, de pourcentage d'insoluble et de perte de fer. Ces critères ont été relevés selon deux âges différents de chaque composition solubilisée, tel qu'indiqué au tableau 2.

**TABLEAU 2.-**

| | Examen 1 de la solution | | | | Examen 2 de la solution | | | |
|---|---|---|---|---|---|---|---|---|
| | Age de la solution | Turbidité (NTU) | Insolubles (%p) | Perte en fer (% relatif ) | Age de la solution | Turbidité (NTU) | Insolubl es (%p) | Perte en fer (% relatif ) |
| 1 | 15 min | 2 | 0,06 | < 1 | 24 J | 2 | 0,06 | < 1 |
| 2 | 15 min | 40 | 0,08 | < 1 | 21 J | 45 | 0,09 | < 1 |
| 3 | 10 min | 11 | 0,06 | < 1 | ND | ND | ND | ND |
| 4 | 10 min | < 50 | 0,08 | < 1 | 14 H | > 2000 | 15 | > 50 |
| 5 | 15 min | 10 | 0,08 | < 1 | 7 J | 410 | 0,7 | 16 |
| 6 | 15 min | 27 | 0,07 | < 1 | 24 J | 24 | 0,08 | <1 |

| | | | | | | | | |
|---|---|---|---|---|---|---|---|---|
| ND = valeur non déterminée J = jours H = heures | | | | | | | | |

Pour répondre aux critères selon la présente invention, la mise en solution aqueuse de la composition nutritive inorganique solide doit permettre d'obtenir une solution nutritive dans laquelle les différents composants sont totalement dissous et ce rapidement. Au sens de la présente invention, on considère que tous les composants sont dissous si :
- la turbidité mesurée est inférieure à 50 NTU, et
- le pourcentage en poids d'insoluble est inférieur à 0,2%.

Par ailleurs, il faut également que la perte en fer soit inférieure à 5% lors du passage de l'état solide à l'état dissous de cet élément métallique.

Suite à un premier examen réalisé 10 à 15 minutes après la mise en solution de ladite composition nutritive inorganique selon l'invention, on constate que les différentes compositions testées (n° 1 à 6 au tableau 2) permettent toutes de répondre à ces trois critères quels que soit, selon les essais réalisés, le type de polyphosphate, la source de fer, la concentration en fer.

De même, on a observé de manière très avantageuse que certaines compositions présentaient une stabilité accrue, même après dissolution. Il s'agit des compositions n°1, 2 et 6 qui après 20 à 21 jours présentent toujours une turbidité et une teneur en insoluble réduite.

### EXEMPLE 2. - Stabilité des compositions solides

Le temps de vie du produit (shelf-life) et donc sa stabilité est déterminé en le soumettant au même test de dissolution après différentes durées de compression à 25°C dans les conditions du test de mottage décrit plus bas.

Selon l'invention, le produit est périmé dès le moment où
- la turbidité mesurée est supérieure à 50 NTU, et
- le pourcentage en poids d'insoluble est supérieur à 0,2%.

Deux compositions solides selon l'invention ont été considérées (tableau 3) pour évaluer si un vieillissement de la forme solide influe sur sa dissolution lors de sa mise en solution.

Une première composition vieille de moins d'un jour a été comparée à une deuxième composition vieille de 21 jours.

**TABLEAU 3.-**

| | Composition solide | | | | Test de dissolution | | |
|---|---|---|---|---|---|---|---|
| | Type de polyphosphate | Source de Fe | RM (Poly / Fe) | Age | [Fe] mmol/kg solution | Temps dissolutio n (min) | pH |
| 1 | KTPP (a) | FeSO₄. 7H₂O (b) | 10 | < 1 J | 50 | 3 min | 8,3 |
| 2 | KTPP (a) | FeSO₄. 7H₂O (b) | 10 | 21 J * | 50 | 5 min | ND |

| | | | | | | | |
|---|---|---|---|---|---|---|---|
| (a) 46,4% en poids de P₂O₅ total, 53,3% en poids de K₂O, 1,6%p > 1 mm, 86%p < 0,5 mm (b) 19,2% en poids de fer total ND = valeur non déterminée J = Jours * vieillissement de 21 jours sous compression à une température de 25°C | | | | | | | |

Comme on peut le constater, les deux formes solides présentent un temps de dissolution équivalent de l'ordre de 3 à 5 minutes pour une turbidité de la solution inférieure à 50 NTU et un pourcentage en poids d'insolubles inférieur à 0,2%, ce qui démontre la stabilité au cours du temps de la forme solide de la composition selon l'invention lorsqu'elle est conservée à une température de 25°C.

### EXEMPLE 3 ; - Tests de mottage (indice de mottage)

La mesure de l'indice de mottage est obtenue par un test de laboratoire qui a été mis au point par les inventeurs pour quantifier la tendance au mottage d'une composition solide et ainsi la caractériser. Cet indice reflète la résistance mécanique de la carotte de produit obtenue après 21 jours de compression à 25°C dans une cellule étanche empêchant quasiment tout échange d'humidité ou d'oxygène avec l'air ambiant.

La cellule de compression comprend deux demi-cylindres en acier inoxydable (obtenus en coupant un tube suivant sa médiane longitudinale) qui sont maintenus fermés autour d'un disque à l'aide d'un carcan amovible. Le disque, qui est également en acier inoxydable, ferme le cylindre à sa base. Le disque a un diamètre de 46 mm et une hauteur de 10 mm. Le cylindre a une hauteur de 80 mm. Le carcan et les deux demi-cylindres se retirent aisément sans secouer le disque. Un piston en polypropylène, qui coulisse librement à l'intérieur du cylindre et qui est surmonté d'un poids de 6 kg, vient comprimer le produit par le haut. Le piston en forme de disque a un diamètre de 44 mm et une hauteur de 30 mm.

L'ensemble du montage (hormis le poids de 6 kg) est emballé dans un sachet composé d'un film plastique multicouches comprenant une feuille d'aluminium et thermo-soudé de manière à empêcher tout échange d'humidité avec l'air ambiant. L'étanchéité du sachet est vérifiée par gravimétrie, la variation de poids relative du produit ne devant pas dépasser 0,2% sur la durée du test. Un remplissage homogène de la cellule est assuré en effectuant cette opération de façon progressive tout en faisant tourner la cellule sur elle même. Le produit est tassé à l'aide du piston avant la fin du remplissage afin d'éviter un tassement excessif pendant la phase de compression elle-même. La masse de la composition varie ainsi entre 70 et 120 g. Le haut du piston doit dépasser du cylindre jusqu'à la fin de la phase de compression, sans quoi le poids risque de ne pas exercer la pression attendue de 0,36 bar. Il faut aussi veiller à ce que le poids soit parfaitement centré par rapport au piston.

L'ensemble est maintenu au repos pendant toute la phase de compression. La mesure dynamométrique est effectuée au plus tard 4 heures après le retrait du poids. Après avoir retiré le carcan et les deux demi-cylindres sans secouer la carotte de produit, un banc dynamométrique est utilisé pour mesurer la force de rupture de la carotte. Cette force est appliquée verticalement au centre du piston en forme de disque via une pointe métallique. L'avancement de la pointe est piloté par le banc dynamométrique à une vitesse constante de 60 mm / minute. La force de rupture en Newton (N) que l'on mesure de cette manière correspond à l'indice de mottage par définition. Ce dernier vaut 0 si le produit coule au moment du démoulage ou si la carotte vient à s'effondrer entre le démoulage et la mesure dynamométrique.

L'échelle du dynamomètre utilisée au laboratoire était limitée à 460 N. Quand cette force à fond d'échelle ne suffisait pas pour provoquer la rupture de la carotte, la carotte était alors été soumise à une seconde mesure dynamométrique après avoir retiré le piston et remplacé la pointe par un couteau calibré.

Les résultats obtenus pour trois compositions nutritives solides inorganiques selon l'invention sont présentés au tableau 4 ci-dessous. Un rapport P _{poly}/Fe égal à 10 a été fixé pour chacune des compositions. Une durée de compression de 21 jours à 25°C a été appliquée.

**TABLEAU 4.-**

| | Type de polyphosphate | Source de Fe | Murissement avant compression * | Indice de mottage (1) | Force de rupture avec le couteau (Newton) |
|---|---|---|---|---|---|
| 1 | KTPP (a) | FeSO₄. 7H₂O (c) | Aucun | > 460 | 131 |
| 2 | KTPP (a) | FeSO₄. 7H₂O (c) | 24 heures | 83 | - |
| 3 | KTPP (a) | FeSO₄. 6-7H₂O (b) | 24 heures | 32 | - |

| | | | | | |
|---|---|---|---|---|---|
| (a) 46,6% en poids de P₂O₅ total, 53,2% en poids de K₂O, 0.6%p > 2 mm, 34%p < 0,5 mm (b) 19,8% en poids de fer total (c) 19,2% en poids de fer total (1) force de rupture en Newton avec le disque * réaction entre les deux poudres constituantes avant compression du mélange avec pour conséquence un phénomène d'enrobage. | | | | | |

Pour répondre aux critères selon la présente invention, la composition nutritive solide inorganique doit pouvoir être conservée sans prendre en masse. Cette caractéristique est respectée dès lors que l'indice de mottage est inférieur à 100 après compression à 25°C. Comme présenté au tableau 4 et pour un rapport P_{poly}/Fe fixé à 10, on constate qu'un indice de mottage inférieur à 100 est observé pour les compositions 2 et 3, c'est-à-dire suite à un murissement d'une durée de 24 heures avant compression à 25°C durant 21 jours.

### Exemple 4. - Culture hydroponiques (concombre)

Des essais en culture hydroponique (sans substrat) sous serre ont été menés durant 6 semaines pour tester l'efficacité des solutions nutritives selon l'invention.

Préalablement, des concombres ont été semés dans de la vermiculite pour obtenir des plantules. Ces plantules ont été transférées 3 semaines après leur semis dans des conditions de culture hydroponique, c'est-à-dire dans des bacs en plastique (50x30x20cm) munis d'un couvercle en PVC comprenant des perforations. Ces bacs sont remplis d'eau et de solution nutritive et les racines des plantules sont introduites dans la solution aqueuse au travers des perforations du couvercle. Le couvercle permet d'isoler la solution nutritive du milieu extérieur afin d'éviter la pénétration de lumière et/ou de contaminants qui pourraient altérer la solution nutritive fertilisante. La partie aérienne du végétal est supportée par un matériau inerte et flexible. Les bacs sont également munis de buses permettant d'injecter de l'air dans la solution nutritive afin de fournir de l'oxygène au système racinaire.

Le niveau d'eau dans les bacs est contrôlé deux fois par semaine et la quantité de solution nutritive est ajustée en fonction de la conductivité électrique de la solution nutritive. La conductivité électrique de la solution est fixée à 3 mS.cm⁻¹ au départ et est maintenue entre 2,5 et 3,5 mS.cm⁻¹ tout au long de la culture.

Le pH de la solution nutritive est par ailleurs mesuré trois fois par semaine et ajusté si nécessaire par ajout d'un mélange HNO₃ + H₂SO₄ (dans un ratio 12 :1) ou de KOH.

### a) Traitements : sources de fer testées

Trois sources de fer (P1 à P3) selon l'invention, à base de sulfate ferrique, ont été testées à deux pH différents de la solution nutritive et ont été comparées à un chélate organique de fer commercial standard de référence (P4). Les caractéristiques des solutions testées sont présentées au tableau 5 ci-dessous.

**TABLEAU 5.-**

| Solution | mmol Pₜₒₜₐₗ/I | µmol Fe/I | pH | Agent complexant du Fe | RM (P_{poly}/Fe) |
|---|---|---|---|---|---|
| P1a | 1,5 | 15 | 5,2 - 5,6 | TKPP (a) | 10 |
| P1b | 1,5 | 15 | 6,4 - 6,8 | TKPP(a) | 10 |
| P2a | 1,5 | 15 | 5,2 - 5,6 | KTPP (b) | 10 |
| P2b | 1,5 | 15 | 6,4 - 6,8 | KTPP (b) | 10 |
| P3a | 1,5 | 15 | 5,2 - 5,6 | KTPP (b) | 20 |
| P3b | 1,5 | 15 | 6,4 - 6,8 | KTPP (b) | 20 |
| P4a | 1,5 | 15 | 5,2 - 5,6 | chélate organique | 0 |
| P4b | 1,5 | 15 | 6,4 - 6,8 | chélate organique | 0 |

| | | | | | |
|---|---|---|---|---|---|
| (a) 42,7% en poids de P₂O₅ total, 57,0% en poids de K₂O (b) 46,6% en poids de P₂O₅ total, 53,2% en poids de K₂O | | | | | |

Les autres éléments nutritifs listés au tableau 6 ont été apportés au milieu nutritif selon des standards recommandés pour la culture du concombre.

**TABLEAU 6.-**

| Nutriment | Valeur cible | |
|---|---|---|
| NH₄ | 0,1 | mmole / l |
| K | 8 | mmole / l |
| Ca | 6,5 | mmole / l |
| Mg | 3 | mmole / l |
| NO₃ | 18 | mmole / l |
| SO₄ | 3,5 | mmole / l |
| Mn | 7 | µmole / l |
| Zn | 7 | µmole / l |
| B | 50 | µmole / l |
| Cu | 1,5 | µmole / l |
| Mo | 1 | µmole / l |

Chaque traitement a été répété 4 fois, chaque répétition consistant en un bac contenant de l'eau et la solution nutritive testée ainsi que 2 plants de concombres.

### b) Analyses

Afin de juger de l'efficacité des sources de fer P1 à P3 selon l'invention, les paramètres suivants ont été mesurés en fin de culture (après 6 semaines) :
- production de biomasse (poids sec),
- concentrations en micronutriments : analyse des tissus,

Un traitement statistique (ANOVA, P<0,05) a été appliqué pour comparer les différents traitements.

### b.1. Production de biomasse

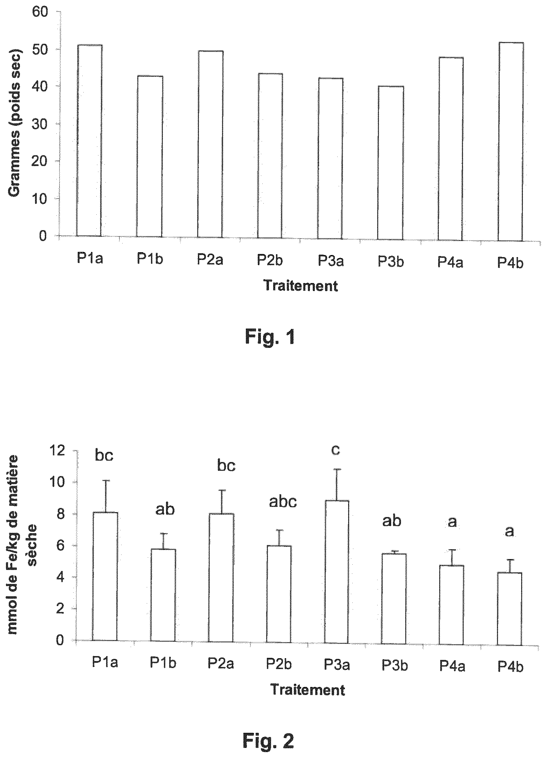

Les plants de concombres ont été récoltés après 6 semaines de croissance en hydroponie selon les modalités décrites ci-dessus. Suite à un séchage des tissus, le poids sec a été déterminé pour les plants de concombres (racines + partie aérienne des plants). La figure 1 présente les résultats obtenus.

Comme on peut le constater, aucune différence significative n'est observée entre les différents traitements appliqués en terme de biomasse en fin de croissance.

### b.2. Concentrations en nutriments

Les concentrations en nutriments, en mmol/ kg de matière sèche (sauf pour le cuivre en µmol/ kg de matière sèche) ont été déterminées sur tissus secs selon les techniques classiquement utilisées pour doser les nutriments. Les résultats obtenus (n=4) sont présentés au tableau 7 ci-dessous. La figure 2 concerne uniquement la concentration en fer mesurée au départ de la matière sèche.

**TABLEAU 7.-**

| | P1a | P1b | P2a | P2b | P3a | P3b | P4a | P4b |
|---|---|---|---|---|---|---|---|---|
| K | 1565 | 1508 | 1653 | 1608 | 1609 | 1503 | 1856 | 1542 |
| Na | 18 | 18 | 30 | 17 | 19 | 16 | 26 | 19 |
| Ca | 921 | 958 | 911 | 984 | 886 | 958 | 877 | 1048 |
| Mg | 332^{ab} | 353^{ab} | 323^{ab} | 362^{ab} | 296^{a} | 334^{ab} | 319^{ab} | 377^{b} |
| P total | 385 | 371 | 414 | 398 | 375 | 386 | 413 | 396 |
| Fe | 8,2^{bc} | 5,9^{ab} | 8,2^{bc} | 6,1^{abc} | 9,0^{c} | 5,8^{ab} | 4,9^{a} | 4,5^{a} |
| Nₜₒₜₐₗ | 4748 | 4439 | 4645 | 4665 | 4656 | 4410 | 4756 | 4575 |
| Mn | 1,8 | 1,9 | 1,5 | 2,0 | 1,6 | 2,0 | 1,7 | 1,7 |
| Zn | 2,4^{ab} | 2,3^{ab} | 2,3^{ab} | 2,6^{b} | 2,2^{ab} | 2,3^{ab} | 1,5^{a} | 1,4^{a} |
| B | 4,1 | 3,6 | 4,1 | 3,8 | 4,0 | 3,9 | 4,2 | 3,9 |
| Cu | 342 | 349 | 352 | 345 | 371 | 374 | 292 | 330 |
| Mo | 106 | 72 | 103 | 80 | 104 | 81 | 104 | 106 |

L'analyse statistique réalisée (ANOVA) a mis en évidence que les plants nourris avec les solutions P1 a, P2a et P3a (pH compris entre 5,2 et 5,6) contiennent plus de fer que les plants nourris avec la solution nutritive de référence P4a à ce même pH. A pH plus élevé (P1 b, P2b, P3b et P4b où le pH est compris entre 6,4 et 6,8), aucune différence significative n'est notée pour le fer, ce qui peut s'expliquer par une complexation moindre à cause de la basicité plus élevée de la solution.

### b.3. Chlorose

Durant les 6 semaines de culture en hydroponie, les symptômes de déficience en Fe ont été évalués visuellement.

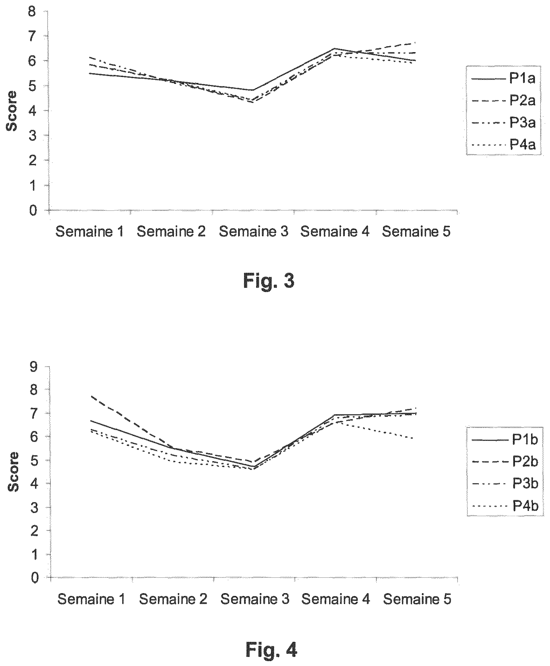

La chlorose, indicatrice d'une carence en fer, a été évaluée selon des scores allant de 0 (couleur verte des feuilles) à 10 (couleur jaune des feuilles). La figure 3 présente les résultats obtenus lorsque le pH de la solution nutritive est compris entre 5,2 et 5,6 tandis que la figure 4 présente les résultats obtenus lorsque le pH de la solution nutritive est compris entre 6,4 et 6,8.

Ces deux figures permettent de constater que des chloroses selon des scores équivalents sont observés au cours du temps pour les différents traitements appliqués, quelque soit le pH.

Il ressort ainsi que les compositions selon l'invention permettent une meilleure assimilation (incorporation) des macro- et des micronutriments dans les végétaux, particulièrement en ce qui concerne le fer.

### Exemple comparatif

L'exemple du brevet CN 1274706 a été reproduit à l'échelle de laboratoire. Le solide obtenu à l'issue de la manipulation a été soumis au test de dissolution selon l'exemple 1 de la présente invention.

La solution obtenue présente une turbidité à 10 mmoles de Fe/kg de solution dépassait 1000 NTU.

La teneur en insoluble atteignait en outre 59% par rapport à la masse de poudre introduite dans le test de dissolution. La composition selon CN 1274706 n'est donc en aucun cas une composition solide hydrosoluble.

## Revendications

1. Composition nutritive solide inorganique comprenant au moins un polyphosphate et au moins une source de fer en tant que micronutriment, **caractérisée en ce que** ladite composition nutritive solide est une composition nutritive solide hydrosoluble comprenant une teneur en fer comprise entre 0,1 et 5% en poids de fer par rapport au poids total de ladite composition solide, de préférence entre 1 et 3% en poids de fer par rapport au poids total de ladite composition solide, **en ce que** ledit au moins un polyphosphate est choisi dans le groupe constitué des polyphosphates alcalins sodiques et potassiques sous forme de poudre ou de granulé, lesdits polyphosphates présentant 2 à 3 atomes de P, et **en ce que** la composition présente un rapport molaire P_{poly}/Fe compris entre 5 et 50, où P_{poly} désigne le nombre de moles de phosphore sous forme de chaînes polyphosphates.

2. Composition nutritive solide inorganique selon la revendication 1, **caractérisée en ce qu'**elle comprend en outre au moins une source additionnelle de micronutriment choisie dans le groupe constitué des sources de B, Mn, Zn, Cu, Mo, Co et leurs mélanges, et **en ce que** ladite au moins une source additionnelle de micronutriments est présente dans un ratio atomique par rapport au Fe compris entre 0,1 et 5 pour le B, entre 0,05 et 2,5 pour le Mn, entre 0,01 et 1 pour le Zn, entre 0,005 et 0,25 pour le Cu et pour le Mo et entre 0,001 et 0,1 pour le Co.

3. Composition nutritive solide inorganique selon l'une des revendications 1 et 2, **caractérisée en ce que** ledit au moins un polyphosphate est choisi dans le groupe constitué des pyrophosphates et des tripolyphosphates, comme par exemple le tétrapotassium pyrophosphate (TKPP), le potassium tripolyphosphate (KTPP), le sodium tripolyphosphate (STPP), le pyrophosphate de sodium acide (SAPP) et le tétrasodium pyrophosphate (TSPP).

4. Composition nutritive solide inorganique selon l'une des revendications 1 à 3, présentant un rapport molaire M/Pₜₒₜₐₗ entre 1 et 2, de préférence entre 1,3 et 2 et où M représente le nombre de moles total en métal alcalin sodique et potassique et où Pₜₒₜₐₗ représente le nombre de moles total de phosphore.

5. Composition nutritive solide inorganique selon l'une quelconque des revendications 1 à 4, **caractérisée en ce qu'**elle comprend en outre du phosphore sous forme d'orthophosphate selon un rapport molaire Pₒᵣₜₕₒ/Pₜₒₜₐₗ inférieur ou égal à 0,95, où Pₒᵣₜₕₒ représente le nombre de moles de phosphore sous forme d'orthophosphate et où Pₜₒₜₐₗ représente le nombre de moles de phosphore total, ce rapport molaire étant de préférence inférieur ou égal à 0,3.

6. Composition nutritive solide inorganique selon l'une quelconque des revendications 1 à 5, **caractérisée en ce qu'**elle présente un rapport molaire P_{poly}/Fe compris entre 8 et 32.

7. Composition nutritive solide inorganique selon l'une quelconque des revendications 1 à 6, **caractérisée en ce qu'**elle présente après introduction dans un bécher de diamètre intérieur 6 cm et, dissolution dans l'eau à 20°C, pendant un temps de dissolution inférieur à 15 minutes et sous agitation à l'aide d'un barreau magnétique à une vitesse de 400 tours par minute, un pourcentage d'insoluble inférieur à 0,2% en poids par rapport au poids de la composition solide, de préférence inférieur à 0,1% en poids , la teneur en insoluble étant mesurée de manière gravimétrique par filtration sur une membrane de 0,45 µm et étant exprimée par rapport à la masse initiale de solide, le résidu étant lavé et séché à 105°C, une turbidité de solution inférieure à 50 NTU, de préférence inférieure à 20 NTU, à une concentration de référence de 10 mmol de Fe/kg de solution.

8. Utilisation d'une composition nutritive solide inorganique selon l'une quelconque des revendications 1 à 7, pour la fabrication d'une solution dans laquelle les macronutriments et les micronutriments sont biodisponibles.

9. Utilisation selon la revendication 8, comme composition fertilisante pour l'horticulture, la fertirrigation, l'hydroponie et analogues.

## Patentansprüche

1. Feste anorganische Nährstoffzusammensetzung, die zumindest ein Polyphosphat und zumindest eine Eisenquelle als Mikronährstoff umfasst, **dadurch gekennzeichnet, dass** die erwähnte feste Nährstoffzusammensetzung eine feste wasserlösliche Nährstoffzusammensetzung ist, die einen Eisengehalt von zwischen 0,1 und 5 Gew.-% Eisen im Verhältnis zum Gesamtgewicht der erwähnten festen Zusammensetzung umfasst, bevorzugt zwischen 1 und 3 Gew.-% Eisen im Verhältnis zum Gesamtgewicht der erwähnten festen Zusammensetzung, und dadurch, dass das erwähnte zumindest eine Polyphosphat ausgewählt wird aus der Gruppe bestehend aus alkalischen Natrium- und Kaliumpolyphosphaten in Form von Pulver oder Granulat, wobei die erwähnten Polyphosphate 2 bis 3 P-Atome aufweisen, und dadurch, dass die Zusammensetzung ein Stoffmengenverhältnis P_{poly}/Fe von zwischen 5 und 50 aufweist, wobei P_{poly} die Molzahl von Phosphor in Form von Polyphosphatketten bezeichnet.

2. Feste anorganische Nährstoffzusammensetzung nach Anspruch 1, **dadurch gekennzeichnet, dass** sie ferner mindestens eine zusätzliche Quelle von Mikronährstoffen ausgewählt aus der Gruppe bestehend aus den Quellen von B, Mn, Zn, Cu, Mo, Co und deren Mischungen umfasst, und dadurch, dass die erwähnte zumindest eine zusätzliche Quelle von Mikronährstoffen in einem Atomverhältnis im Verhältnis zum Fe von zwischen 0,1 und 5 für das B, zwischen 0,05 und 2,5 für das Mn, zwischen 0,01 und 1 für das Zn, zwischen 0,005 und 0,25 für das Cu und das Mo und zwischen 0,001 und 0,1 für das Co vorhanden ist.

3. Feste anorganische Nährstoffzusammensetzung nach einem der Ansprüche 1 und 2, **dadurch gekennzeichnet, dass** das erwähnte zumindest eine Polyphosphat ausgewählt wird aus der Gruppe bestehend aus den Pyrophosphaten und den Tripolyphosphaten, wie zum Beispiel Tetrakaliumpyrophosphat (TKPP), Kaliumtripolyphosphat (KTPP), Natriumtripolyphosphat (STPP), Natriumsäurepyrophosphat (SAPP) und Tetranatriumpyrophospat (TSPP).

4. Feste anorganische Nährstoffzusammensetzung nach einem der Ansprüche 1 bis 3, welche ein Stoffmengenverhältnis M/Pₜₒₜₐₗ zwischen 1 und 2 aufweist, bevorzugt zwischen 1,3 und 2, und wobei M die Gesamtmolzahl an Alkalimetall Natrium und Kalium darstellt, und wobei Pₜₒₜₐₗ die Gesamtmolzahl an Phosphor darstellt.

5. Feste anorganische Nährstoffzusammensetzung nach irgendeinem der Ansprüche 1 bis 4, **dadurch gekennzeichnet, dass** sie ferner Phosphor in Form von Orthophosphat gemäß einem Stoffmengenverhältnis Pₒᵣₜₕₒ/Pₜₒₜₐₗ von weniger als oder gleich 0,95 umfasst, wobei Pₒᵣₜₕₒ für die Molzahl von Phosphor in Form von Orthophosphat steht und wobei Pₜₒₜₐₗ für die Molzahl von Gesamtphosphor steht, wobei dieses Stoffmengenverhältnis bevorzugt weniger als oder gleich 0,3 ist.

6. Feste anorganische Nährstoffzusammensetzung nach irgendeinem der Ansprüche 1 bis 5, **dadurch gekennzeichnet, dass** sie ein Stoffmengenverhältnis P_{poly}/Fe von zwischen 8 und 32 aufweist.

7. Feste anorganische Nährstoffzusammensetzung nach irgendeinem der Ansprüche 1 bis 6, **dadurch gekennzeichnet, dass** sie nach Einführung in einen Becher mit einem Innendurchmesser von 6 cm und Auflösung in Wasser bei 20 °C während einer Lösezeit von weniger als 15 Minuten und bei Rühren mithilfe eines Magnetrührstabes bei einer Geschwindigkeit von 400 Umdrehungen pro Minute einen unlöslichen Anteil von weniger als 0,2 Gew.-% im Verhältnis zum Gewicht der festen Zusammensetzung aufweist, bevorzugt weniger als 0,1 Gew.-%, wobei der Gehalt an Unlöslichem gravimetrisch durch Filtern durch eine Membran von 0,45 µm gemessen wird und im Verhältnis zur ursprünglichen Masse an Feststoff ausgedrückt wird, wobei der Rückstand gewaschen und bei 105 °C getrocknet wird, eine Trübung der Lösung von weniger als 50 NTU, bevorzugt weniger als 20 NTU, bei einer Referenzkonzentration von 10 mmol Fe/kg Lösung, festgestellt wird.

8. Verwendung einer festen anorganischen Nährstoffzusammensetzung nach irgendeinem der Ansprüche 1 bis 7 für die Herstellung einer Lösung, in der die Makronährstoffe und die Mikronährstoffe biologisch verfügbar sind.

9. Verwendung nach Anspruch 8, als Düngemittelzusammensetzung für Gartenbau, Beregnungsdüngung, Hydrokultur und Ähnliches.

## Claims

1. Inorganic solid nutritive composition comprising at least one polyphosphate and at least one source of iron as a micronutrient, **characterised in that** said solid nutritive composition is a water-soluble solid nutritive composition comprising a concentration of iron between 0.1 and 5 % iron by weight with respect to the total weight of said solid composition, preferably between 1 and 3 % iron by weight with respect to the total weight of said solid composition, **in that** said at least one polyphosphate is chosen from the group consisting of the sodium and potassium alkali polyphosphates in powder or granular form, said polyphosphates having 2 to 3 atoms of P, and **in that** the composition has a molar ratio of P_{poly}/Fe between 5 and 50, where P_{poly} designates the number of moles of phosphorus in the form of polyphosphate chains.

2. Inorganic solid nutritive composition according to claim 1, **characterised in that** it further comprises at least one additional source of micronutrient chosen from the group consisting of the sources of B, Mn, Zn, Cu, Mo, Co and their mixtures, and **in that** said at least one additional source of micronutrients is present in an atomic ratio with respect to the Fe between 0.1 and 5 for B, between 0.05 and 2.5 for Mn, between 0.01 and 1 for Zn, between 0.005 and 0.25 for Cu and for Mo and between 0.001 and 0.1 for Co.

3. Inorganic solid nutritive composition according to one of claims 1 and 2, **characterised in that** said at least one polyphosphate is chosen from the group consisting of the pyrophosphates and the tripolyphosphates, for example such as tetrapotassium pyrophosphate (TKPP), potassium tripolyphosphate (KTPP), sodium tripolyphosphate (STPP), sodium acid pyrophosphate (SAPP) and tetrasodium pyrophosphate (TSPP).

4. Inorganic solid nutritive composition according to one of claims 1 to 3, having a molar ratio M/Pₜₒₜₐₗ between 1 and 2, preferably between 1.3 and 2 and where M represents the total number of moles of sodium and potassium alkali metal and where Pₜₒₜₐₗ represents the total number of moles of phosphorus.

5. Inorganic solid nutritive composition according to any one of claims 1 to 4, **characterised in that** it further comprises phosphorus in the form of an orthophosphate with a molar ratio Pₒᵣₜₕₒ/Pₜₒₜₐₗ less than or equal to 0.95, where Pₒᵣₜₕₒ represents the number of moles of phosphorus in the form of an orthophosphate and where Pₜₒₜₐₗ represents the total number of moles of phosphorus, this molar ratio being preferably less than or equal to 0.3.

6. Inorganic solid nutritive composition according to any one of claims 1 to 5, **characterised in that** it has a molar ratio of P_{poly}/Fe between 8 and 32.

7. Inorganic solid nutritive composition according to any one of claims 1 to 6, **characterised in that** it has, after introduction into a beaker having an inner diameter of 6 cm and , dissolution in water at 20 °C, for a dissolution time of less than 15 minutes and with stirring using a stir bar at a speed of 400 rpm, a percentage of insoluble matter less than 0.2 % by weight with respect to the weight of the solid composition, preferably less than 0.1 % by weight , the concentration of insoluble matter being measured gravimetrically via filtration over a membrane of 0.45 µm and being expressed with respect to the initial mass of solid, the residue being washed and dried at 105 °C, a solution turbidity less than 50 NTU, preferably less than 20 NTU, at a reference concentration of 10 mmol of Fe/kg of solution.

8. Use of an inorganic solid nutritive composition according to any one of claims 1 to 7, for the production of a solution in which the macronutrients and the micronutrients are bioavailable.

9. Use according to claim 8, as a fertilising composition for horticulture, fertirrigation, hydroponics and the equivalent.
